# EUROPÄISCHE PATENTSCHRIFT

(11) **EP 1 088 204 B1**
(45) Veröffentlichungstag und Bekanntmachung des Hinweises auf die Patenterteilung: **08.10.2003**
(21) Anmeldenummer: 99939911.6
(22) Anmeldetag: 18.06.1999
(51) Int. Cl.: G01G 19/08

(54) **GEWICHTSERFASSUNG DER NUTZLAST EINES NUTZFAHRZEUGS MIT VERTIKALBESCHLEUNIGUNGSSENSOR**
DETECTING THE WEIGHT OF THE USEFUL LOAD OF A COMMERCIAL VEHICLE BY MEANS OF A VERTICAL ACCELERATION SENSOR
MESURE PONDERALE DE LA CHARGE UTILE D'UN VEHICULE AVEC UN CAPTEUR D'ACCELERATION VERTICALE

(30) Priorität: 19.06.1998 DE 19827268
(43) Veröffentlichungstag der Anmeldung: 04.04.2001
(73) Patentinhaber: Pfreundt GmbH, 46354 Südlohn (DE)
(72) Erfinder: WISSING, Ludger, D-48712 Gescher (DE)
(74) Vertreter: Habbel, Ludwig (Lutz), Dipl.-Ing.
(86) Internationale Anmeldenummer: DE9901800
(87) Internationale Veröffentlichungsnummer: WO99067607

(56) Entgegenhaltungen:
- EP-A- 0 410 709
- EP-A- 0 537 857
- EP-A- 0 932 032
- DE-U- 29 810 965
- US-A- 5 877 455

## Beschreibung

Die Erfindung betrifft eine Anordnung nach dem Oberbegriff des Anspruches 1 und ein Verfahren nach dem Oberbegriff des Anspruches 7.

Eine gattungsgemäße Anordnung und ein gattungsgemäßes Verfahren sind aus der US 5 877 455 bekannt, wobei die Sensoren jeweils an sämtlichen Achsen des Fahrzeugs und ggf. eines Anhängers angebracht sein müssen. Aus der DE 36 11 189 A1 und aus der DE 195 08 239 A1 sind gattungsfremde Anordnungen und Verfahren bekannt.

Wie auch viele andere unterschiedlich ausgestaltete, aus der Praxis bekannte Anordnungen und Verfahren betreffen sämtliche vorgenannten Druckschriften Wiegeeinrichtungen, mit deren Hilfe die Nutzlast eines Nutzfahrzeuges möglichst präzise ermittelt, also bestimmt werden soll.

Das die Nutzlast aufnehmende Bauteil kann beispielsweise, wie aus der DE 36 11 189 A1 bekannt, die Pritsche eines LKW's oder ein Container sein, oder, wie aus der DE 195 08 239 A1 bekannt, ein Auflieger eines Sattelzuges, oder, wie vielfach in der Praxis, die Mulde eines Radladers, eines Kipplasters oder eines Dumpers sein.

Die angestrebte möglichst präzise Gewichtsermittlung dient gemäß DE 36 11 189 A1 zur Einhaltung rechtlich vorgeschriebener Höchstgewichte von Nutzlast bzw. Fahrzeug-Gesamtgewicht und begünstigt durch Verwendung mehrerer verteilt angeordneter Sensoren die Überwachung der gleichmäßigen Verteilung des Ladegutes. Gemäß DE 195 08 239 A1 soll das Gewicht eines Aufliegers auch während der Fahrt gemessen werden können, ohne die Kraftübertragung zwischen Zugmaschine und Auflieger zu beeinträchtigen. Aus der Praxis ist weiterhin eine möglichst präzise Gewichtsermittlung der Nutzlast insbesondere zu Zwecken der Abrechnung erwünscht, sie kann aber auch für Rückschlüsse auf den Verschleiß am Fahrzeug dienen. Bei der Anordnung gemäß der US 5 877 455 wird das Beschleunigungsverhalten der Achsen, an denen die Beschleunigungssensoren angeordnet sind, durch das Federungsverhalten der Reifen stark beeinflußt. Unterschiedliche Luftdrücke in den Reifen sowie unterschiedliche Verformbarkeiten der Reifen können daher das Meßergebnis beeinflussen. Der Luftdruck in den Reifen ist durch die Temperatur des Reifens beeinflußt, diese wiederum durch Umgebungstemperatur, Sonneneinstrahlung sowie Fahrtdauer und Fahrtgeschwindigkeit. Die Verformbarkeit der Reifen ist durch die Profilstärke sowie durch das Alter der Reifen beeinflußt.

Es ist wünschenswert, über die reine Erfassung der Menge hinaus, welche pro Ladung des Fahrzeuges transportiert wird, auch eine Aussage darüber zu machen, ob das Fahrzeug im unbeladenen oder beladenen Zustand fährt. Derartige Informationen dienen den Konstrukteuren bei der Auslegung der Fahrzeuge und den Fahrzeughaltern bei der Auswahl der für die jeweilige Belastung am besten geeigneten Bereifung. Sie können zudem, beispielsweise insbesondere bei Mietfahrzeugen, eine Aussage darüber ermöglichen, ob unzulässigerweise mit einem bestimmten Gewicht eine unzulässig lange Fahrstrecke zurückgelegt wurde oder überhaupt eine vorgeschriebene Maximalbelastung überschritten wurde, zum Beispiel in Abhängigkeit von den überfahrenen Bodenunebenheiten bestimmte Maximalgewichte eingehalten wurden. Zudem kann durch eine ergänzende Gewichtserfassung eine Unterscheidung von Pausenzeiten und Ladezeiten ermöglicht werden, so daß betriebliche Abläufe optimiert werden können.

Bei den bekannten Anordnungen ist nachteilig, daß die Aussage über das vorhandene Gewicht üblicherweise nur in einer bestimmten Wiegeposition des die Nutzlast aufnehmenden Bauteiles möglich ist, beispielsweise in einer bestimmten Kippstellung der erwähnten Mulden. Dies gilt beispielsweise für handelsübliche Wiegestäbe, die mit Dehnungsmeßstreifen versehen sind und eine Torsion oder Durchbiegung der Wiegestäbe auswerten. Im Ruhezustand des die Nutzlast aufnehmenden Bauteiles hingegen, wenn dieses nicht gekippt ist, können keine Aussagen über die Gewichtsbelastung des Fahrzeuges gemacht werden. Abhängig von Schräglagen des Fahrzeugs während der Wiegung kann die Gewichtsbestimmung fehlerhaft sein, so daß versehentlich oder, insbesondere bei Mietfahrzeugen absichtlich, falsche Gewichtsangaben resultieren.

Andere Meßverfahren sind unabhängig von einer bestimmten Wiegestellung des die Nutzlast aufnehmenden Bauteiles. Derartige Systeme, die beispielsweise den hydraulischen Druck in den Stempeln auswerten, mit denen diese Bauteile angehoben werden, geben jedoch nur dann verwertbare Meßergebnisse, wenn das Bauteil momentan angehoben wird. Im Ruhezustand dieses Bauteiles, wenn die hydraulischen Stempel nicht betätigt werden, können daher keine Aussagen über die Gewichtsbelastung des Fahrzeuges gemacht werden.

Weiterhin sind Meßverfahren bekannt, bei denen der Druck in öl-/gasgefüllten Federungs- und Stoßdämpfungelementen des Fahrwerkes ermittelt wird. Sie sind unabhängig von einer bestimmten Wiegestellung und können auch im Ruhezustand des die Nutzlast aufnehmenden Bauteiles arbeiten. Nachteilig ist jedoch ihr komplizierter Einbau und die erforderliche spezielle Anpassung an die Vielzahl unterschiedlicher Fahrzeugtypen. Die Meßgenauigkeit kann durch eine erhöhte Reibung innerhalb der Federungselemente beeinträchtigt sein, wenn die Federungselemente gegenüber der Vertikalen schräggestellt vorgesehen sind oder das Fahrzeug auf schiefem Untergrund abgestellt ist. Auch durch Temperatureinflüsse ergibt sich eine unterschiedliche Reibung innerhalb derartiger Federbeine, so daß im Tagesverlauf mit den sich ändernden Umgebungstemperaturen oder abhängig von der Sonneneinstrahlung unterschiedliche Meßwerte bei gleicher Nutzlast erhalten werden und die Gewichtsanzeige dementsprechend ungenau ist.

Der Erfindung liegt die Aufgabe zugrunde, eine gattungsgemäße Anordnung dahingehend zu verbessern, daß sie Aussagen über den Ladezustand des Fahrzeuges bei stillstehendem Fahrzeug ermöglicht und preisgünstig an einer Vielzahl unterschiedlicher Fahrzeuge verwendbar ist, sowie ein dazu geeignetes Verfahren anzugeben.

Diese der Erfindung zugrundeliegende Aufgabe wird durch eine Anordnung mit den Merkmalen des Anspruches 1 und ein Verfahren mit den Merkmalen des Anspruches 7 gelöst.

Die Erfindung schlägt mit anderen Worten überraschend vor, kein möglichst genaues, sondern ein bewußt recht grob arbeitendes Meßsystem zu verwenden, welches daher keine präzise quantitative Aussage über die Höhe des Gewichts der momentanen Nutzlast ermöglicht, welches aber eine prinzipielle, qualitative Aussage darüber ermöglicht, ob das Fahrzeug momentan beladen wird, so daß anschließend die Aussage möglich ist, ob es sich im beladenen oder unbeladenen Zustand befindet:

Wird beispielsweise eine Leerfahrt durchgeführt, so darf bei einer späteren Auswertung eines Fahrtenschreibers oder einer ähnlichen Aufzeichnung ein folgender Stillstand des Fahrzeugs nicht notwendigerweise als Ladezeit interpretiert werden. Vielmehr kann aus technischen Gründen eine Fahrtunterbrechung erforderlich sein oder der Fahrer legt eine Pause ein.

Ein Beladen des Fahrzeuges ist jedoch durch erhebliche Vertikalbeschleunigungen zumindest einer Mulde oder eines ähnlichen die Nutzlast aufnehmenden Bauteiles erkennbar, üblicherweise auch durch eine ggf. geringfügig gedämpfte entsprechende Vertikalbeschleunigung des Fahrzeuges insgesamt bzw. des Fahrzeugrahmens.

Gegenüber der Anordnung der US 5 877 455 sind die Einflüsse der Reifen auf das Federungs- und damit das Beschleunigungsverhalten der Sensoren wesentlich geringer, da der Sensor bzw. die Sensoren nicht an einer ungefederten Achse, sondern an einem gefederten Fahrzeugteil angeordnet ist, z. B. am Fahrzeugrahmen (Chassis), so daß sich das Federungsverhalten des gesamten Fahrzeugs auf den Sensor auswirkt, worauf sich das Federungsverhalten der Reifen selbst nur zu einem geringen Anteil auswirkt. Die Montage der Sensoren ist an den gefederten Fahrzeugteilen auf einfache Weise derart möglich, daß die Sensoren und ihre Kabel gegnüber mechanischen Beschädigungen optimal geschützt sind.

Die erfindungsgemäße Anordnung ermöglicht eine Aussage über die Effektivität des Beladevorgangs, da z. B. jedes Abkippen des Schaufelinhaltes eines Radladers in die Mulde eines Muldenkippers eine Belastungs- bzw. Beschleunigungsspitze bewirkt. Wenn bei zwei Ladevorgängen dieselbe Nutzlastmenge mit einer unterschiedlichen Anzahl von Schaufelentleerungen erzielt wird, ist der Beladevorgang mit mehr Schaufeln nachteiliger aufgrund der häufigeren Kippvorgänge und längeren Fahrwege des Radladers, selbst wenn beide Beladevorgänge dieselbe Zeit beanspruchen.

Der durch die Vertikalbeschleunigungen erkannte Zustand "Beladung" des Fahrzeuges wird auf einem Datenspeicher gekennzeichnet, der entsprechend dem Zeitpunkt der Beladung eine Markierung erhält, z. B. mechanisch in Form einer Schreibmarke auf der Tachoscheibe eines Fahrtenschreibers oder in Form einer Information in einem elektronischen Datenspeicher. Anstelle lokaler Datenspeicher im Fahrzeug kann auch vorgesehen sein, den Datenspeicher zentral anzuordnen, beispielsweise auf einem Industriegelände, auf dem das Fahrzeug ausschließlich bewegt wird, wobei die Daten per Funk an den zentralen Datenspeicher übermittelt werden können.

Das Maß der Belastung des Fahrzeugs beim Beladen selbst kann durch die Vertikalbeschleunigung unmittelbar gemessen werden. Diese Belastung bzw. Vertikalbeschleunigung beim Beladen ist allerdings kein zuverlässiges Maß für das Gewicht der Nutzlast, da sie beispielsweise abhängig von der Einwurfhöhe des geladenen Materials ist sowie, bei der Fahrt des Fahrzeugs, abhängig von der Ausgestaltung der Bodenunebenheiten.

Unabhängig von dieser Belastung beim Beladen kann rückwirkend eine Analyse über die Belastung des Fahrzeuges spätestens dann erfolgen, wenn das Nutzlastgewicht präzise ermittelt wurde, z. B. während das Material entladen wurde. Dies kann durch eine an sich bekannte am Fahrzeug vorhandene Wiegeeinrichtung erfolgen, z. B. durch Drucksensoren in den hydraulischen Kippzylindern einer Mulde, oder durch eine externe Waage, z.B. an einem Bunker, der vom Fahrzeug befüllt wird.

Ggf. können die Sensoren zur Ermittlung der Vertikalbeschleunigung auch einen Entladevorgang registrieren, insbesondere z. B. wenn grobes Gestein aus der Mulde eines Dumpers poltert. Zwischen diesen beiden Zeitpunkten des Beladens einerseits und der späteren Entladung, die ggf. mit einer exakten Gewichtserfassung der Nutzlast verbunden sein kann, sind nun alle Betriebszustände des Fahrzeuges unter Berücksichtigung der Belastung nachträglich ermittelbar und auswertbar. Zu diesem Zweck sind die ermittelten Meßwerte, unter anderem auch die der Vertikalbeschleunigungssensoren, in einem Datenspeicher abgelegt und nicht - bzw. nicht nur - für den Fahrer momentan sichtbar angezeigt.

Die Vertikalbeschleunigung kann zudem Auskünfte über die Fahrzeugbelastung bei Fahrt über unebenen Grund geben, wenn die Werte der die Vertikalbeschleunigung registrierenden Sensoren nicht nur als ein ausgewertetes oder gefiltertes Signal mit dem Bedeutungsinhalt "Ladevorgang läuft ab" an den Datenspeicher weitergegeben werden, sondern wenn auch die Signale eines derartigen Fahrbetriebes an den Datenspeicher weitergegeben werden. Die zusätzliche Erkenntnis, ob das Fahrzeug dabei beladen oder unbeladen war, kann eine genaue Berechnung der auf das Fahrzeug und seine einzelnen Komponenten einwirkenden Kräfte ermöglichen.

Die erfindungsgemäße Anordnung läßt sich auf einfache und sehr preiswerte Weise an Fahrzeugen anbringen oder nachrüsten, evtl. in Ergänzung jeder Art von bereits installiertem Wiegesystem:

Die Sensoren müssen nicht fahrzeugspezifisch angepaßt sein, sondern können preiswert in größeren Stückzahlen zur Verwendung an beliebigen Fahrzeugen hergestellt werden.

Die Sensoren können geschützt angeordnet werden, z. B. im Bereich des Fahrzeugchassis, wobei hier auch eine geschützte Verkabelung möglich ist.

Besonders preiswert ist die Anordnung weniger Sensoren, insbesondere eines einzigen Sensors möglich, der für die gewünschte rein qualitative Aussage über den Ladezustand ausreicht. Die Material-und Insatallationskosten können somit besonders gering gehalten werden.

Gegenüber Sensoren, die im Bereich der Mulde oder eines ähnlichen die Nutzlast aufnehmenden Bauteiles angeordnet werden könnten, um einen Beladevorgang zu registrieren, ist daher eine erheblich einfachere Installation mit dementsprechend niedrigeren Installationskosten möglich sowie ein beschädigungsärmerer und zuverlässigerer Betrieb.

Der bzw. die Sensoren können vorteilhaft unter dem zu erwartenden Schwerpunkt der Nutzlast, z. B. unter der Mitte einer Mulde, am die Nutzlast aufnehmenden Bauteil oder am Fahrzeugchassis montiert sein.

Dabei ist die Montage der Sensoren denkbar einfach, da sie lediglich an ein Fahrzeugbauteil angeschraubt werden müssen. Es ist dabei nicht erforderlich, vorhandene Bauteile des Fahrzeugs, ggf. öl- oder gasgefüllte Bauteile wie die erwähnten Federbeine zu öffnen.

Vorteilhaft kann ein System zur Zeiterfassung vorgesehen sein, wobei bestimmten Uhr-, Betriebs- oder Fahrzeiten bestimmte Meßwerte der Sensoren für die Vertikalbeschleunigung zugeordnet werden. Auf diese Weise ist später eine einfache Auswertung möglich, indem genau festgestellt werden kann, zu welchem Zeitpunkt das Fahrzeug beladen und ggf. entladen wurde, so daß ein einfacher Abgleich mit den Daten der ohnehin vorhandenen präzisen Gewichtsermittlung möglich ist und damit die Aussage ermöglicht wird, wann das Fahrzeug welchen Belastungen ausgesetzt war.

Weiterhin kann vorteilhaft ein System zur Wegstreckenerfassung vorgesehen sein, welches die vom Fahrzeug zurückgelegte Wegstrecke erfaßt. Das erwähnte System zur Zeiterfassung ermöglicht dann die einfache Zuordnung bestimmter Wegstrekken zu bestimmten Zeiten, so daß auf einen Blick übersichtlich bestimmbar ist, über welche Entfernungen und über welchen Zeitraum das Fahrzeug beladen oder unbeladen bewegt wurde.

insbesondere kann die Verknüpfung des bekannten Ladezustandes mit weiteren Werten wie Standzeiten, Fahrzeiten, Durchschnittsgeschwindigkeit etc. zur Ermittlung optimaler Betriebsbedingungen genutzt werden, z. B. Wartungsintervalle oder Reifenwahl.

Vorteilhaft wird die erfindungsgemäße Anordnung ergänzt durch die üblicherweise an den Nutzfahrzeugen vorgesehenen Gewichtssensoren, so daß in der beschriebenen Weise nicht nur eine Aussage über die Fahrtzustände im beladenen oder unbeladenen Zustand möglich ist, sondern anschließend aufgrund der Gewichtserfassung auch eine präzise Aussage darüber möglich ist, mit welcher Gewichtsbelastung das Fahrzeug betrieben wurde.

Nach der exakten Bestimmung des Nutzlastgewichtes ist es möglich, das Gewicht der Nutzlast mit bestimmten Beschleunigungswerten der Vertikalbeschleunigungs-Sensoren zu vergleichen, wie sie z.B. beim Beladen am stehendem Fahrzeug auftrat. Trotz der dabei auftretenden Ungenauigkeiten kann eine grobe Abschätzung des Nutzlastgewichtes daher beim nächsten Ladevorgang aufgrund der gemessenen Beschleunigungswerte vorgenommen werden, so daß z. B. der Fahrer eine grobe, erste Abschätzung über die in das Fahrzeug geladene Nutzlast erhalten kann. Weitere derartige Vergleiche von Beschleunigungswerten und später ermittelter exakter Nutzlast können zur Berechnung eines ausreichend genauen Mittelwertes führen, der für die Korrelation "Beschleunigungswerte einerseits - Nutzlast andererseits"verwendet wird und dann für die grobe Abschätzung des Nutzlastgewichtes herangezogen werden kann.

Die meisten Beladevorgänge laufen diskontinuierlich ab, z. B. durch einen Radlader, der mehrere Schaufelinhalte in zeitlichen Abständen in das Fahrzeug füllt. Aufgrund des sich dabei von Schaufel zu Schaufel ändernden Fahrzeug-Gesamtgewichts kann selbst bei identischen Schaufel-Gewichtsinhalten und identischer Abwurfhöhe die z. B. vierte oder fünfte Schaufel geringere Beschleunigungswerte verursachen als die erste Schaufel, da sich das Massenverhältnis zwischen Fahrzeug und neu aufgeladener Ladung mit jeder Schaufel verändert. Für die vorerwähnte grobe Abschätzung des Nutzlastgewichtes, wenn also über die rein qualitative Aussage "beladen - unbeladen" hinaus eine grobe quantitative Aussage über das Nutzlastgewicht aufgrund der Werte des Beschleunigungssensors erfolgen soll, kann daher vorgesehen sein, die Belastungsspitzen, die mit den Beschleunigungssensoren ermittelt werden, innerhalb eines Beladungsvorgangs von Mal zu Mal unterschiedlich zu gewichten, z. B. die erste Spitze zu 100%, die zweite zu 120% und dergleichen.

## Patentansprüche

1. Anordnung zur Gewichtserfassung der Nutzlast eines Nutzfahrzeugs,
mit wenigstens einem Sensor zur Erfassung der durch die Vertikalbeschleunigung durch die Nutzlast erzeugten Belastung des Fahrzeuges,
**dadurch gekennzeichnet, daß** der Sensor an einer gefederten Komponente des Fahrzeugs angeordnet ist, und daß ein Datenspeicher zur Aufnahme der von dem Sensor ermittelten Informationen vorgesehen ist.

2. Anordnung nach Anspruch 1, **gekennzeichnet durch** ein System zur Zeiterfassung, wobei bestimmten Zeiten bestimmte Meßwerte der Sensoren zugeordnet sind, wie zur Bestimmung der Pausen- oder Ladezeiten.

3. Anordnung nach Anspruch 2, **gekennzeichnet durch** ein System zur Erfassung der vom Fahrzeug zurückgelegten Wegstrecke, wobei bestimmten Zeiten bestimmte Wegstrecken zugeordnet sind.

4. Anordnung nach einem der vorhergehenden Ansprüche, **dadurch gekennzeichnet, daß** zwei oder mehrere Sensoren zur Erfassung der der Vertikalbeschleunigung vorgesehen sind.

5. Anordnung nach einem der vorhergehenden Ansprüche, **dadurch gekennzeichnet, daß** der oder die Sensoren am Chassis des Fahrzeugs befestigt sind.

6. Anordnung nach einem der vorhergehenden Ansprüche, **gekennzeichnet durch** zusätzliche Gewichtssensoren zur Bestimmung der vorhandenen Nutzlast.

7. Verfahren zum Registrieren der Nutzlast eines Nutzfahrzeuges, wobei die Signale von Vertikalbeschleunigungssensoren ausgewertet werden, die eine Gewichtsbelastung des Fahrzeuges oder des die Nutzlast aufnehmenden Bauteils registrieren, **dadurch gekennzeichnet, daß** die Signale der Sensoren einem Datenspeicher unmittelbar oder in aufbereiteter Form zugeführt werden.

8. Verfahren nach Anspruch 7, **dadurch gekennzeichnet, daß** zu einem späteren Zeitpunkt eine exakte Gewichtsbestimmung der Nutzlast durchgeführt wird.

9. Verfahren nach Anspruch 7 oder 8, **dadurch gekennzeichnet, daß** den Signalen der die Vertikalbeschleunigung erfassenden Sensoren weitere Informationen über die momentane Uhr-, Betriebs- oder Fahrzeit und ggf. über die zurückgelegte Wegstrecke zugeordnet werden.

## Claims

1. Arrangement for recording the weight of the useful load of a goods vehicle,
with at least one sensor to record the load on the motor vehicle generated by the vertical acceleration through the useful load, **characterised in that** the sensor is arranged on a spring-borne part of the motor vehicle and **in that** a data store to receive the information sent by the sensor is provided for.

2. Arrangement in accordance with claim 1, **characterised by** a system for recording time in which system specific measured values recorded by the sensors are assigned to specific times, for example, for determining quiescent or load times.

3. Arrangement in accordance with claim 2, **characterised by** a system for recording the distance travelled by the motor vehicle in which system specific distances are assigned to specific times.

4. Arrangement in accordance with one of the foregoing claims, **characterised in that** two or more sensors for recording the vertical acceleration are provided for.

5. Arrangement in accordance with one of the foregoing claims, **characterised in that** the sensor is or sensors are fastened to the chassis of the motor vehicle.

6. Arrangement in accordance with one of the foregoing claims, **characterised by** additional weight sensors for determining the present useful load.

7. System for recording the useful load of a goods vehicle, by which system the signals from vertical acceleration sensors which record a weight load on the motor vehicle or the part bearing the useful load sensors are evaluated, **characterised in that** the signals from the sensors are fed directly or in a processed form to a data store.

8. System in accordance with claim 7, **characterised in that** the weight of the useful load is precisely determined at a later time.

9. System in accordance with claim 7 or 8, **characterised in that** further information about the instantaneous time of day or operating or driving time and, as applicable, about the distance travelled is assigned to the signals sent by the sensors recording the vertical acceleration.

## Revendications

1. Configuration servant à saisir la charge utile d'un véhicule utilitaire, comprenant au moins un capteur servant à saisir la contrainte subie par le véhicule, due à l'accélération verticale de sa charge utile, **caractérisée en ce que** le capteur est agencé contre un composant sur ressort du véhicule, et qu'une mémoire de données a été prévue pour enregistrer les informations déterminées par le capteur.

2. Configuration selon la revendication 1, **caractérisée par** un système de saisie des temps, sachant qu'à certains temps ont été affectées certaines valeurs de mesure par les capteurs, comme pour la détermination des temps de pause ou des temps de chargement.

3. Configuration selon la revendication 2, **caractérisée par** un système de saisie de la distance parcourue par le véhicule, sachant qu'à certains temps ont été attribuées certaines distances.

4. Configuration selon l'une des revendications précédentes, **caractérisée en ce que** deux ou plusieurs capteurs ont été prévus pour saisir l'accélération verticale.

5. Configuration selon l'une des revendications précédentes, **caractérisée en ce que** le capteur est fixé ou les capteurs sont fixés contre le châssis du véhicule.

6. Configuration selon l'une des revendications précédentes, **caractérisée en ce que** des capteurs supplémentaires de poids servent à déterminer la charge utile présente.

7. Procédé d'enregistrement de la charge utile d'un véhicule utilitaire, sachant que sont analysés les signaux-émis par les capteurs de l'accélération verticale, lesquels enregistrent une contrainte pondérale subie par le véhicule ou par le composant recevant la charge utile, **caractérisé en ce que** les signaux des capteurs sont envoyés à une mémoire de données soit directement, soit sous forme retraitée.

8. Procédé selon la revendication 7, **caractérisé en ce qu'**une détermination exacte du poids de la charge utile a lieu à un moment ultérieur.

9. Procédé selon la revendication 7 ou 8, **caractérisé en ce qu'**aux signaux des capteurs saisissant l'accélération verticale sont attribués d'autres informations sur l'heure actuelle, sur la durée actuelle de service et la durée actuelle de conduite, et le cas échéant sur la distance parcourue.
